# EUROPEAN PATENT APPLICATION

(11) **EP 4 613 668 A1**
(43) Date of publication of application: **10.09.2025**
(21) Application number: 22964478.6
(22) Date of filing: 04.11.2022
(51) Int. Cl.: B65D 41/34

(54) **SCREW CAP**

(71) Applicant: Toyo Seikan Group Holdings, Ltd., Shinagawa-ku Tokyo 141-8627 (JP)
(72) Inventor: AZUMA, Toshifusa, Yokohama-shi, Kanagawa 240-0062 (JP)
(74) Representative: J A Kemp LLP
(86) International application number: PCT/JP2022/041194
(87) International publication number: WO 2024/095461

(57) **Abstract**

The present invention relates to a screw cap that can be formed through thermoforming from a resin sheet, has re-sealing performance through screwing engagement, and makes it possible to achieve liquid-tightness. The screw cap has a drop-lid shape and includes: a top surface; an inner side wall extending upward from an outer peripheral edge of the top surface; and a skirt portion including a screw portion and coupled to the inner side wall through an annular portion extending outward from an upper end of the inner side wall, in which the inner side wall includes an annular protruding portion having an outer diameter greater than an inner diameter of a container mouth portion to which the screw cap is applied, and is elastically deformable in a cap radial direction.

## Description

### Technical Field

The present invention relates to a screw cap, and more specifically, relates to a screw cap that can be formed through thermoforming from a resin sheet and reliably achieve liquid-tightness with a reduced weight.

### Background Art

A screw cap made of resin has been widely used as a screw cap applied to a container such as a polyester bottle. This screw cap is formed through integral molding using plastic, and can achieve liquid-tightness without using a liner or gasket.

As such a cap made of resin, Patent Literature 1 described below proposes a closure cap made of a plastic material and used to close a mouth of a container, the cap including: a cap sidewall portion having a substantially tubular shape and including an internal screw; and a cap top portion including a ring-shaped seal lip and configured to come into contact with the outer side of the mouth of the container to achieve a sealing function at a region of the mouth of the container. The closure cap is configured such that: the inner diameter (A) of the seal lip (5) before the closure cap (1) is screwed is sized so as to be greater than the outer diameter (B) of the container (2); and the cap top portion (4) includes a fixing means that engages with the mouth of the container to cause the container top portion to concentrically achieve a pressing function when the closure cap is screwed up. In addition, at least the cap top portion is made so as to have elasticity, and in association with the fixing means being inserted into the mouth of the container, the container top portion is pressed. As the outer diameter of the container top portion reduces, the seal lip comes into contact with the outer side of the mouth of the container, thereby being able to press it.

In addition, Patent Literature 2 described below describes a screw cap. In the screw cap, a top surface and a skirt extending downward from the peripheral edge of the top surface are integrally formed using plastic. In the screw cap made of resin and including a screw thread provided on the inner peripheral surface of the skirt, an inner ring and an outer ring extending downward from the inner surface of the top surface come into tight contact with the inner surface and the outer surface of the container mouth portion, thereby securing the liquid-tightness.

Furthermore, a synthetic resin cap is proposed. The synthetic resin cap is formed by thermoforming a synthetic resin sheet through air-pressure forming. For example, Patent Literature 3 proposes a method of forming a screw cap through thermoforming of a synthetic resin sheet.

### Citation List

### Patent Literatures

Patent Literature 1: Japanese Patent Application Laid-open Publication No. 58-216552
Patent Literature 2: Japanese Patent No. 3872546
Patent Literature 3: Japanese Examined Patent Application Publication 5-57097

### Summary of Invention

### Problem to Be Solved by the Invention

The screw caps as described in Patent Literatures 1 and 2 described above have high sealing performance, and also have reliable liquid-tightness. However, these screw caps have complicated structures. Thus, typically, they are formed through injection molding or compression molding, and it is difficult to easily form a thin screw cap having a reduced weight.

In addition, in a case where a cap having a multi-layered structure is formed through injection molding or compression molding, it is not easy to uniformly expand an intermediate layer over the entire cap. Thus, in a case of such a typical screw cap, it is difficult to provide an intermediate layer having a gas barrier property to improve the gas barrier property of the cap and reduce the thickness. In addition, it is also difficult to achieve a further reduction in the weight of the cap.

Furthermore, the typical screw cap includes an inner ring. Thus, if the thickness of the top surface reduces, it is inevitable to reduce the tightness, and it is difficult to further reduce the weight of the cap.

Patent Literature 3 described above proposes forming a cap by thermoforming a synthetic resin sheet, and describes that this provides an advantage in which the amount of material used can be reduced, as compared with a cap formed through injection molding or the like.

However, a cap including a sealing portion and a screw portion includes a portion serving as an undercut that protrudes inwardly in a radial direction of the cap. Thus, when the cap that has been shaped through thermoforming is released from the mold, the core mold disposed on the inside of the cap is forcibly removed. With this configuration, the cap made from a thin synthetic resin sheet is more likely to be expanded at the time of forced removal, which leads to a possibility that plastic deformation occurs due to excessive expansion. If the sealing portion and the screw portion of the cap are deformed, it is difficult to obtain a desired tightness.

In addition, it is conceivable to rotate the core mold to release it or the like, thereby suppressing deformation of the undercut portion. However, this method reduces the productivity, and does not fit the purpose of providing a cap that can be easily formed and is excellent from the viewpoint of economy.

Thus, an object of the present invention is to provide a screw cap that can be formed through thermoforming from a resin sheet, has re-sealing performance through screwing engagement, and makes it possible to achieve liquid-tightness.

In addition, another object of the present invention is to provide a screw cap having a reduced thickness and having a reduced weight even in a case where the screw cap is formed through injection molding or compression molding.

Furthermore, another object of the present invention is to provide a screw cap that is formed through thermoforming from a resin sheet, in which plastic deformation is effectively prevented even in a case where the screw cap is released from the mold by forced removal.

### Solution to Problem

The present invention provides a screw cap having a drop-lid shape and including: a top surface; an inner side wall extending upward from an outer peripheral edge of the top surface; and a skirt portion including a screw portion and coupled to the inner side wall through an annular portion extending outward from an upper end of the inner side wall, in which the inner side wall includes an annular protruding portion having an outer diameter greater than an inner diameter of a container mouth portion to which the screw cap is applied, and is elastically deformable in a cap radial direction.

In the screw cap according to the present invention, it is preferable that:
(1) the inner side wall has a shape of an inequality sign that is bent outward in the cap radial direction, and the annular protruding portion is a bend portion of the shape of the inequality sign;
(2) a countersink portion is formed at an outer peripheral edge of the top surface;
(3) the top surface has an upwardly-domed shape or a downwardly-domed shape;
(4) a sealing portion configured to come into tight contact with an outer surface of the container mouth portion is formed at an upper portion of the skirt portion;
(5) the screw cap is made of synthetic resin;
(6) the skirt portion includes a plurality of convex portions disposed in a circumferential direction on an inner surface of the skirt portion, the convex portions having an amount of protrusion in a radial direction smaller than a height of a screw thread, and an irregularity formed in a circumferential direction on the skirt portion by the plurality of convex portions allows the skirt portion to be elastically deformed in a radial direction;
(7) the convex portions are convex portions extending in an axial direction or extending to be tilted relative to the axial direction;
(8) concave portions corresponding to the convex portions are formed on an outer surface of the skirt portion;
(9) the synthetic resin is polyethylene terephthalate; and
(10) the screw cap is a screw cap to be applied to a bottle.

In addition, the present invention provides a method of manufacturing the screw cap described above, the method including forming a synthetic resin sheet into a shape of a cap through thermoforming.

The method of manufacturing the screw cap according to the present invention preferably includes mold releasing from an inside of the cap by forced removal after shaping the synthetic resin sheet into the shape of the cap through the thermoforming.

### Advantageous Effects of Invention

In the screw cap according to the present invention, the inner side wall includes the annular protruding portion having the outer diameter greater than the inner diameter of the container mouth portion to which the screw cap is applied, and is configured be elastically deformable in the cap radial direction. With this configuration, when the screw cap is applied to a container, the annular protruding portion presses the inner surface of the container mouth portion outward in the radial direction with the elastic deformation. This makes it possible to achieve high tight sealing performance.

In addition, since the top surface has a dome shape, it is possible to impart the pressure resistance. This makes it possible to restrain a reduction in the tightness due to deformation. Furthermore, by using the drop-lid shape, it is possible to reduce a head space.

In addition, by forming the resin sheet through thermoforming, it is possible to easily achieve formation into a thin screw cap having a reduced weight. Furthermore, with the thin screw cap, it is possible to improve the flexibility of the cap, which makes it easy to elastically deform the annular protruding portion and the countersink portion.

In addition, the annular protruding portion that makes it possible to achieve the tight sealing is formed on the inner side wall spaced apart from the skirt portion. Thus, the tightness is less likely to be impaired even in a case where the diameter of the lower portion of the skirt portion slightly increases due to the forced removal of the mold as described later.

In addition, in the screw cap according to the present invention, the plurality of convex portions having the amount of protrusion in the radial direction smaller than the height of the screw thread on the inner surface of the cap skirt portion are formed in the circumferential direction. This allows a portion between adjacent convex portions to constitute a concave portion, thereby forming irregularities in the circumferential direction on the inner surface of the skirt portion. Thus, when radially outward force acts on the skirt portion, it expands in the circumferential direction so as to cancel the irregularities, which makes it possible to elastically deform it so as to increase the inner diameter of the skirt portion. In particular, in the cap obtained by forming the synthetic resin sheet through thermoforming, the inner and outer surfaces of the skirt portion have corresponding shapes. Thus, the concave portion is formed on the outer surface corresponding to a portion of the inner surface of the skirt portion where the convex portion is formed, and the entire skirt portion has a substantially bellows shape in which irregularities are arranged in the circumferential direction. This allows the inner diameter of the skirt portion to increase so as to be able to return to its original shape.

Thus, in the screw cap according to the present invention, at the time of forming, even in a case where the core mold located within the cap is forcibly removed after shaping, the diameter of the cap skirt portion easily expands outward in the radial direction. Thus, the core mold easily passes through a portion of undercut such as the screw portion or the sealing portion, and then, the cap skirt portion is able to easily return to the inner side in the radial direction after the core mold passes through the undercut portion. This means that the screw portion and the sealing portion maintain the predetermined shape. This effectively prevents the predetermined tightness from being impaired due to occurrence of plastic deformation and expansion of the screw portion or the sealing portion.

In addition, since the resin sheet is formed through thermoforming and the mold can be removed through forced removal after shaping, it is possible to form the screw cap having the reduced thickness and having the reduced weight in a highly productive manner.

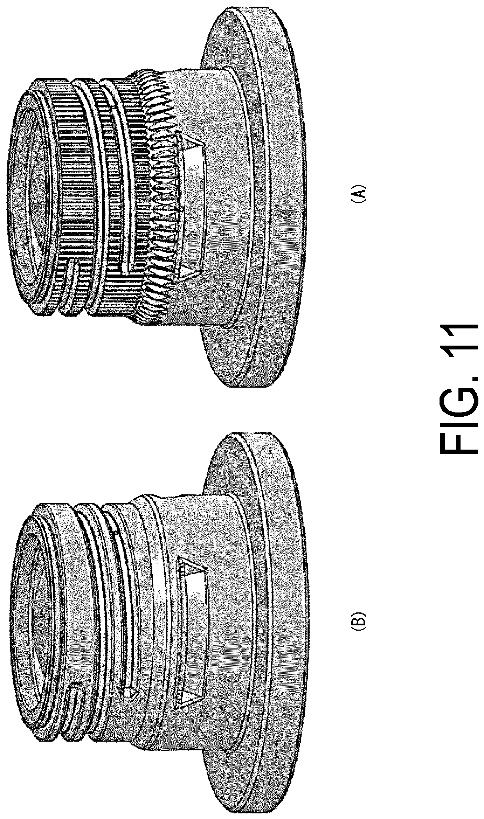

In the screw cap according to the present invention, the workings and effects obtained by forming the convex portions in the skirt portion are obvious from the results of Examples that will be described later. That is, comparison is made between a screw cap (experiment example 1) that is thermoformed using a mold in FIG. 11(A) and a screw cap (experiment example 2) that is thermoformed using a mold (FIG. 11(B)), which is similar except that no convex portion is formed on the inner surface of the cap skirt portion, and that is forcibly removed from the mold. In the screw cap (experiment example 1), convex portions extending in the axial direction are arranged on the inner surface of the cap skirt portion at equal intervals in the circumferential direction, and the convex portions have a height smaller than the height of the screw thread. From this comparison, it can be understood that the skirt portion of the experiment example 1 has a substantially vertical shape. In addition, the inner diameter of the lower portion of the skirt portion of the experiment example 2 increases, and the skirt portion has a tapered shape.

### Brief Description of Drawings

FIG. 1 is a side cross-sectional view illustrating an example of a screw cap according to the present invention.
FIG. 2 is a partially enlarged side cross-sectional view illustrating a state where the screw cap in FIG. 1 is applied to a container mouth portion.
FIG. 3 is a partially enlarged side cross-sectional view illustrating another example of the screw cap according to the present invention.
FIG. 4 is a partially enlarged side cross-sectional view used to explain another mode of an annular protruding portion in the screw cap according to the present invention.
FIG. 5 is a partially enlarged side cross-sectional view illustrating a mode in which no countersink portion is formed in the mode illustrated in FIG. 2.
FIG. 6 is a diagram including a side cross-sectional view (right side) and a side view (left side) each illustrating another example of the screw cap according to the present invention.
FIG. 7 is a partially enlarged side cross-sectional view illustrating a state where the screw cap in FIG. 6 is applied to a container mouth portion.
FIG. 8 is a partial cross-sectional view illustrating only a left half taken along the line X-X of the screw cap in FIG. 6.
FIG. 9 is a partial cross-sectional view used to explain a portion of the cross section illustrated in FIG. 8 in a state where a pressure acts outward in the radial direction of the cap, in which (A) illustrates a state before the diameter increases and (B) illustrates a state after the diameter increases.
FIG. 10 is a diagram including a side cross-sectional view (right side) and a side view (left side) illustrating another example of the screw cap according to the present invention.
FIG. 11 is a perspective view illustrating molds used in examples, in which (A) illustrates a mold used in the experiment example 1 and (B) illustrates a mold used in the experiment example 2.

### Description of Embodiments

A screw cap according to the present invention will be described with reference to the attached drawings.

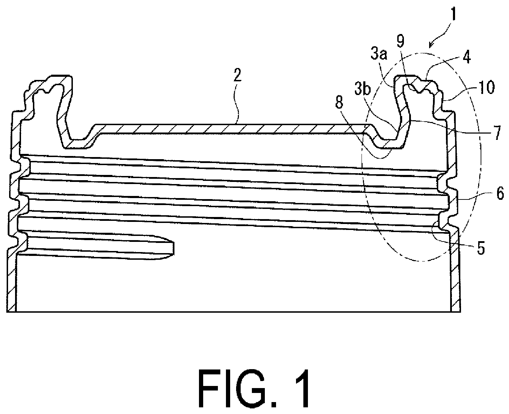

FIG. 1 is a side cross-sectional view illustrating an example of the screw cap according to the present invention. The screw cap is indicated as "1" as a whole, and schematically includes a top surface 2 configured to cover a container opening portion, an inner side wall 3 extending upward from the outer peripheral edge of the top surface 2, and a skirt portion 6 including a screw portion 5 and coupled to the inner side wall through an annular portion 4 extending outward from an upper end of the inner side wall 3.

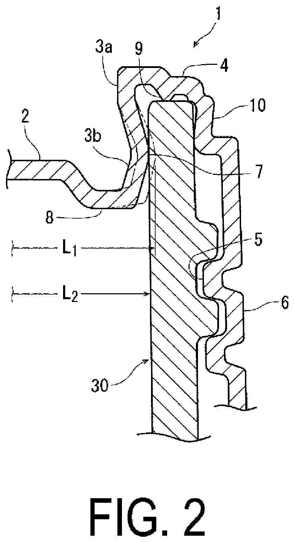

In the screw cap illustrated in FIGS. 1 and 2, the inner side wall 3 described above has a shape of an inequality sign "<" (shape of a Japanese Hiragana letter "ku ( 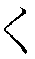 )"), that is, the inner side wall includes an upper inner side wall 3a having an inverted tapered shape in which the outer diameter of the inner side wall increases toward the downward direction, and also includes a lower inner side wall 3b having a tapered shape in which the outer diameter decreases toward the downward direction. In addition, a bending portion serving as a boundary between the upper inner side wall 3a and the lower inner side wall 3b is formed as an annular protruding portion 7. The inner side wall 3 is elastically deformable toward the inner side in the radial direction with the annular protruding portion 7 being the apex.

That is, as illustrated in FIG. 2, the maximum outer diameter L1 of the annular protruding portion 7 in a state of not being applied to a container is formed so as to be greater than the inner diameter L2 of the container mouth portion 30 serving as the target of application. Thus, in a sealed state where the screw cap 1 is applied to the container mouth portion 30 and the cap is screwed and engaged to the bottom dead center, the annular protruding portion 7 is in a state of being in press contact with the inner surface of the container mouth portion 30 in the radial direction. This makes it possible to achieve the excellent liquid-tightness.

Furthermore, in a specific example illustrated in FIGS. 1 and 2, the top surface 2 has a so-called drop-lid shape and is disposed at a lower position relative to the annular portion 4, and a head space is small. This makes it possible to suppress decompression deformation at the time of cooling after hot filling.

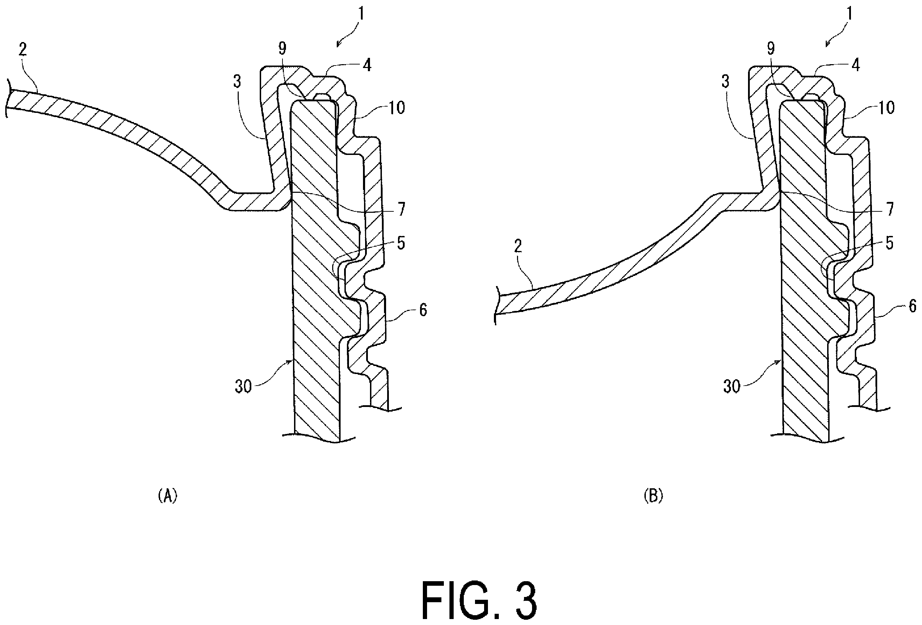

FIG. 3 is a diagram used to explain another mode of the top surface 2 in the screw cap according to the present invention. In the mode illustrated in FIG. 3(A), the top surface 2 has an upwardly-domed shape. In addition, on the contrary, in the mode illustrated in FIG. 3(B), the top surface 2 has a downwardly-domed shape. For example, in a case of application to a container filled with contents such as a carbonated beverage having autogenous pressure, an upward pressure acts on the top surface 2, whereby the annular protruding portion 7 more strongly presses the inner surface of the container mouth portion. This makes it possible to improve the tight sealing performance. In addition, even if the shape is devised and the internal pressure increases, it may be possible that the pressing pressure acting on the inner surface of the container mouth portion by the annular protruding portion 7 does not change. In this case, the easiness of opening is not impaired and at the same time, the tight sealing performance is also maintained. In a case where the top surface 2 has a flat shape as in the specific example illustrated in FIGS. 1 and 2, the top surface 2 is deformed into the domed shape as the internal pressure increases, and the pressing pressure acting on the inner surface of the container mouth portion by the annular discharge portion 7 decreases. This makes it possible to impart a function of a vent property that allows the internal pressure to be removed. In this manner, with the shape of the top surface 2, it is possible to impart a function corresponding to the content.

In addition, in the specific example illustrated in FIGS. 1 and 2, a contact ring 9 configured to come into pressure contact with the top end of the container mouth portion 30 when the cap reaches the bottom dead center due to screwing engagement is formed on the inner surface of the annular portion 4. This further increases the tightness of the cap.

Furthermore, a portion (hereinafter, referred to as an "upper skirt portion 10") of the skirt portion 6 that continues with the annular portion 4 and is disposed higher than the screw portion 5 is formed into an inverted tapered shape in which the outer diameter of the skirt portion decreases toward the downward direction. In addition, the vicinity of the top end of the container mouth portion 30 is fastened through barrel hoop from the outside in the radial direction to form a sealing portion between the outer surface of the container mouth portion and the inner surface of the upper skirt portion 10. This makes it possible to further increase the tightness of the cap.

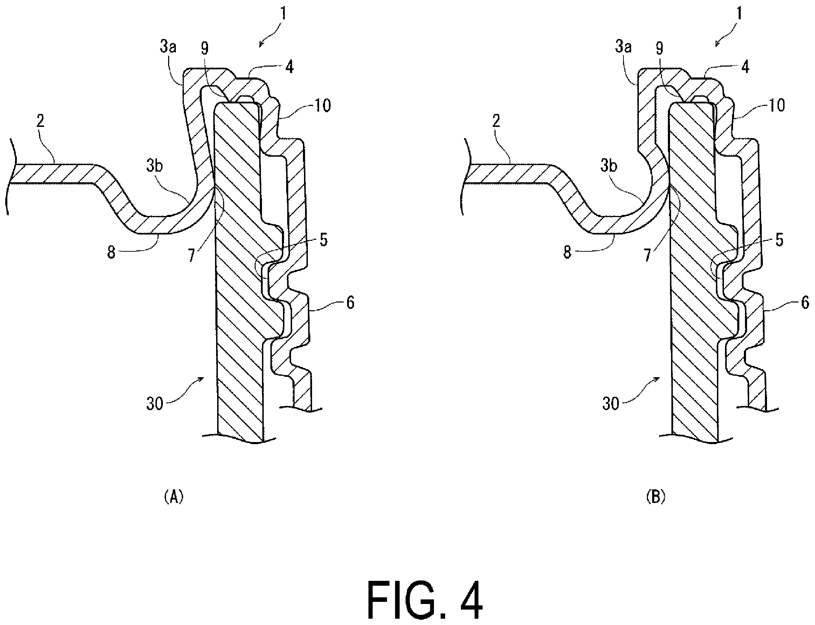

FIG. 4 is a partially enlarged view used to explain another mode of the inner side wall and the annular protruding portion of the screw cap according to the present invention.

In the mode illustrated in FIGS. 1 and 2, the inner side wall 3 includes the upper inner side wall 3a having the inverted tapered shape in which the outer diameter increases toward the downward direction and the lower inner side wall 3b having the tapered shape in which the outer diameter decreases toward the downward direction. In addition, the bending portion serving as a boundary between the upper inner side wall 3a and the lower inner side wall 3b is formed as the annular protruding portion 7. However, in the mode illustrated in FIG. 4(A), the upper inner side wall 3a has the inverted tapered shape as in FIG. 1 and FIG. 2, and the lower inner side wall 3b is formed so as to have an arc shape in which the top point of the arc faces the obliquely downward. In addition, the boundary between the upper inner side wall 3a and the lower inner side wall b is formed as the annular protruding portion 7. In this mode, with the upper inner side wall 3a having the inverted tapered shape, the liquid-tightness is secured by elastic deformation of the annular protruding portion 7 outwardly in the radial direction.

In addition, in the mode illustrated in FIG. 4(B), the upper inner side wall 3a is provided as a straight side wall that does not have any slope. In addition, the lower inner side wall 3b has an arc shape in which the apex of the arc faces the outside direction in the radial direction and is located at more outside in the radial direction than the upper inner side wall 3a. Furthermore, in this mode, a contact point between this arc and the container mouth portion constitutes the annular protruding portion 7. In this mode, the annular protruding portion 7 is elastically deformed outwardly in the radial direction by the lower inner side wall 3b having the arc shape, which secures the liquid-tightness.

The screw cap according to the present invention is not limited to the specific example described above as long as the annular protruding portion having the outer diameter greater than the inner diameter of the container mouth portion to which the screw cap is applied is formed on the inner side wall, and can take various types of modes.

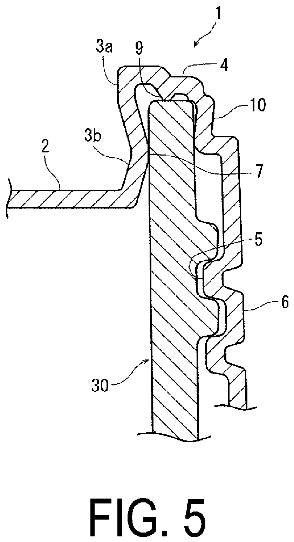

For example, in the specific example illustrated in FIG. 1, with a countersink portion 8 being formed, the countersink portion is also elastically deformable in the cap radial direction at the time of application to a container as described above, and the pressing pressure acting outwardly in the radial direction on the inner surface of the container mouth portion by elastic deformation of the annular protruding portion increases. This makes it possible to achieve the high sealing performance. Thus, this specific example is a favorable mode. However, depending on the thickness of the screw cap or the size of the top surface or the like, it is also possible to achieve the high tight sealing performance even in a case where no countersink portion is formed. That is, as illustrated in FIG. 5, even in a case where no countersink portion is formed, it is possible to achieve the excellent sealing performance only by the pressing pressure acting outwardly in the radial direction by the annular protruding portion 7.

In the screw cap according to the present invention, a relationship between the outer diameter (L1) of the annular protruding portion and the inner diameter (L2) of the container mouth portion serving as the target of application can be changed as appropriate on the basis of the degree of elastic deformation of the annular protruding portion due to the mouth diameter of the container, the thickness of the cap, the presence or absence of the countersink portion, and the like. However, it is preferable that the difference of L1 - L2 falls in a range of 0.1 to 1.0 mm.

In addition, in a case where the upper inner side wall is formed into the inverted tapered shape, the taper angle can be changed as appropriate depending on the length of the upper inner side wall or the difference L1 - L2 described above or the like. However, it is preferable that the taper angle is formed so as to fall in a range of 0.1 to 45° relative to the axial direction of the cap.

Similarly, in a case where the upper skirt portion is formed into the inverted tapered shape, it is possible to change the taper angle as appropriate depending on the length of the upper skirt portion or the like. However, it is preferable to form it so as to fall in a range of 0.1 to 45° relative to the axial direction of the cap.

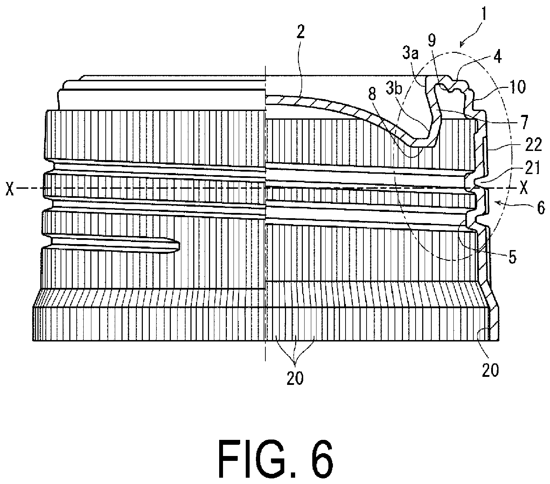

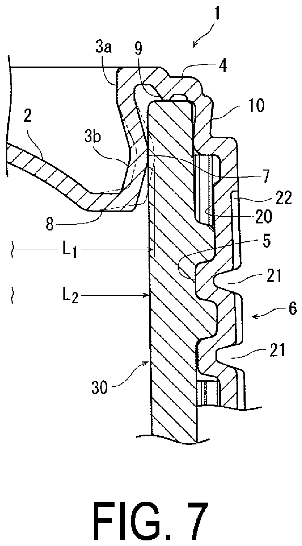

In FIGS. 6 and 7 illustrating another mode of the screw cap according to the present invention, the cap has the same basic structure as the screw cap illustrated in FIG. 1. However, this mode has important characteristics in which the cap is made of synthetic resin, and a plurality of convex portions 20, 20··· extending in the axial direction of the cap and protruding inwardly in the radial direction of the cap are formed on the inner surface of the skirt portion 6 at equal intervals in the circumferential direction.

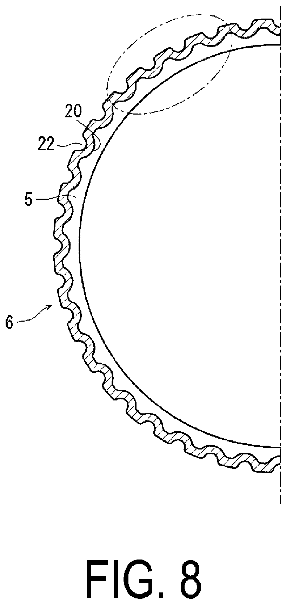

These convex portions 20, 20··· have the amount of inward protrusion in the radial direction smaller than the height of the screw portion 5. Thus, they do not impair rotation of the screw. In addition, as illustrated in FIG. 8, the same corresponding irregularity shape is formed at each of the inner surface and the outer surface of the cap, that is, a spirally shaped concave portion 21 that is recessed inwardly in the radial direction and corresponds to the screw portion 5 is formed on the outer surface of the cap skirt portion 6, and a plurality of axial concave portions 22, 22, ··· that extend in the axial direction and are recessed in the radial direction are formed at equal intervals in the circumferential direction so as to correspond to the shape of the convex portions 20, 20, ···. In addition, the skirt portion 6 has a substantially bellows shape in cross-section in the horizontal direction.

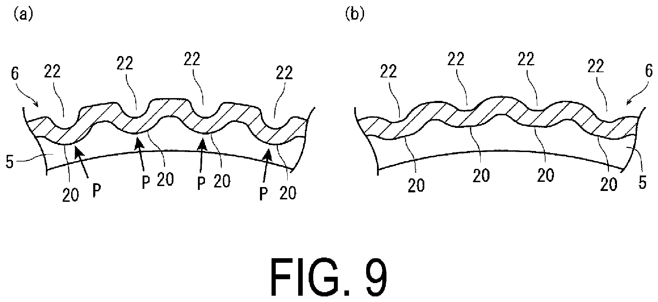

With this configuration, when a radially outward pressure acts on the convex portions 20, 20, 20, ··· from the inner surface of the skirt portion as illustrated in FIG. 9(A), the convex portions 20, 20, 20, ··· are expanded in the circumferential direction, whereby the diameter of the skirt portion 6 increases (FIG. 9(B)). After this, when the pressure is removed, the skirt portion 6 is able to easily return to the original irregularity shape.

Thus, in the screw cap in the mode illustrated in FIG. 6, at the time of releasing from the mold during forming, it is possible to easily perform forced removal of a portion of undercut such as the sealing portion or the screw portion as described above. The sealing portion or the screw portion is plastically deformed, which effectively prevents its function from being impaired.

In addition, with the screw cap in this mode, a plurality of convex portions having the amount of protrusion in the radial direction smaller than the height of the screw portion are arrayed in the circumferential direction on the inner surface of the skirt portion. Thus, the convex portion on the inner surface of the skirt portion comes into contact with the screw thread of the container mouth portion even if external force acts on the cap skirt portion, for example, in a case of being accommodated in a bag or the like in a state where the screw cap is fastened to the container mouth portion. This makes it possible to restrain the deformation of the cap and prevent the cap from being loosened. In particular, the cap formed through thermoforming using a synthetic resin sheet is highly effective since this cap has a smaller thickness, as compared with the cap formed through compression molding or injection molding, and the skirt portion is more likely to be deformed by external force.

In a case of the screw cap in this mode, a plurality of convex portions having the amount of protrusion in the radial direction smaller than the height of the screw portion are arrayed in the circumferential direction on the inner surface of the skirt portion as described above. With this configuration, it is possible to employ various modes, as long as the skirt portion can be elastically deformed in the radial direction.

That is, in the specific example illustrated in FIGS. 6 and 7, the axial concave portions 22, 22, 22 ··· corresponding to the convex portions 20, 20, 20 ··· formed on the inner surface of the skirt portion 6 are formed on the outer surface of the skirt portion 6, and the skirt portion has a substantially bellows shape. Thus, in a case where a radially outward pressure acts from the inner surface of the skirt portion at the time of releasing from the mold, the diameter of the skirt portion easily increases and can easily return to the original state once the pressure is removed. However, depending on the amount of undercut, the concave portions corresponding to the convex portions may not need to be formed on the outer surface of the skirt portion. In this manner, even in a case where no concave portion is formed on the outer surface of the skirt portion, a portion between adjacent convex portions 20, 20 is in a state of being recessed inwardly in the radial direction, as compared with the convex portion 20, and irregularities are formed on the inner surface of the skirt portion. Thus, when a radially outward pressure acts, the concave portions having a small thickness are more likely to be expanded, and the convex portions are less likely to be expanded. This enables the inner diameter of the skirt portion to increase in the elastic range, and to return to the original state once the pressure is removed.

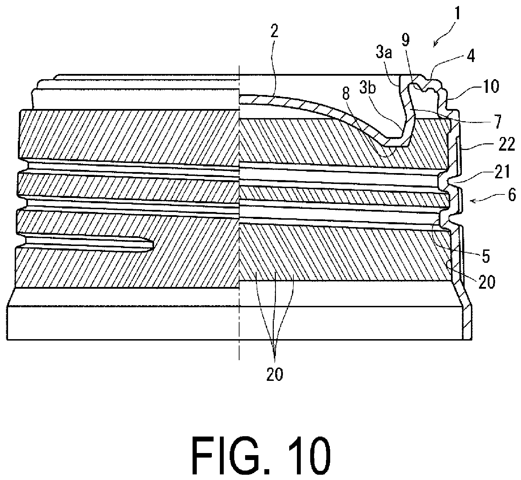

In the specific example illustrated in FIGS. 6 and 7, the convex portions formed on the inner surface of the skirt portion are convex portions straightly extending in the axial direction of the cap. However, the convex portion may be tilted relative to the axial direction. For example, as illustrated in FIG. 10, it may be possible to employ a configuration in which concave portions tilted relative to the axial direction are formed on the inner surface of the cap skirt portion, concave portions tilted relative to the axial direction are formed on the outer surface of the cap skirt portion, and irregularities having a spiral shape are formed over the entire skirt portion of the cap. Note that, in a case where the convex portion tilts relative to the axial direction, it is preferable that the tilt angle is equal to or less than 85°, and more preferably, is equal to or less than 10° from the viewpoint of expanding and returning of the diameter of the skirt portion.

In addition, as long as the diameter of the skirt portion can be increased and return to the original state at the time of releasing from the mold, the convex portions formed on the inner surface of the skirt portion do not need to be formed such that convex portions having the same shape are formed at equal intervals in the circumferential direction. For example, the convex portion may have a round shape, an oval shape, a triangle shape, a trapezoid shape, or a rectangular shape. In addition, it may be possible to employ a configuration in which convex portions having different lengths in the axial direction of the convex portion or different heights are combined and are arrayed, convex portions are arrayed with distances between adjacent convex portions being different from each other, convex portions are formed only at a portion of the inner surface of the skirt portion, the height and the shape of the convex portion vary at upper and lower portions, or it may be possible to employ a shape in which the tilt angle changes in the middle so as to curve, or a shape that meanders in a form of letter "S."

In the screw cap according to the present invention, the height (the amount of protrusion from the inner surface of the skirt portion) of the screw portion can be changed as appropriate in accordance with the height of the screw portion of the mouth portion of the container to which the cap is applied or the synthetic resin sheet used. However, it is preferable that the height falls in a range of 0.4 to 1.5 mm for a cap having a mouth diameter of 28 mm suitable for general bottle-shaped container. In addition, the height of the convex portion can be changed as appropriate in accordance with the thickness of the skirt portion, the width and length of the convex portion, the arrangement (the interval and the number), or the like. However, it is preferable that the height falls in a range of 10% to 80% of the height of the screw portion, and more preferably in a range of 30% to 50% of the height.

Furthermore, as described above, the convex portion can be used at a portion of the inner surface of the skirt portion or the like. For the purpose of uniform diameter expansion, it is desirable that the convex portion is uniformly formed on the inner surface of the skirt portion, and is not limited to this. However, in a case of a cap applied to a bottle having a mouth diameter of 28 mm, it is desirable that convex portions having widths of 0.2 to 5.0 mm are uniformly formed at intervals of 0.2 to 5.0 mm. In addition, the length in the axial direction of the convex portion can be changed as appropriate in accordance with the locations of the screw portion and the sealing portion serving as the undercut portion. However, it is desirable that this length is a length extending from a position higher than the top dead center of the screw portion to a position lower than the bottom dead center thereof as in the specific example shown in FIGS. 6 and 7.

Either resin or metal may be used for the screw cap according to the present invention, as long as it is possible to form the shapes described above and achieve elastic deformation of the annular protruding portion. However, it is preferable to use resin for the cap because the cap can be easily formed and it is possible to reliably achieve elastic deformation through flexibility.

In a case of the cap made of resin, it may be possible to use typically known thermoplastic resin such as olefin resin or polyester resin or the like that has been used to form the cap made of resin. In particular, it is preferable to use polyester resin, among other things, polyethylene terephthalate to form the cap.

In the case of the cap made of metal, it is possible to use a metal conventionally used to form a metal cap, such as aluminum.

In addition, as for the forming method, it is possible to form the cap made of resin using a conventionally known forming method such as compression molding or injection molding. However, preferably, it is desirable to use a resin sheet to form this through thermoforming such as vacuum pressure molding or plug assist pressure molding.

In addition, in a case of the cap made of metal, it is possible to form a metal sheet through press forming. In a case of the cap made of metal, it is also possible to use a conventionally known shape, which includes forming a liner material on the annular portion, forming a tamper-evident band through a breakable weakened portion at the lower end of the skirt portion, or the like.

As described above, the screw cap according to the present invention is particularly preferably formed through thermoforming such as vacuum pressure molding or plug assist pressure molding using a synthetic resin sheet. This makes it possible to easily form a screw cap having a small thickness and achieve weight reduction.

In addition, the cap thermoformed using a synthetic resin sheet has a small thickness as compared with a cap formed through compression molding or injection molding. Thus, it is possible to easily increase the diameter, while plastic deformation is more likely to occur. However, by forming the convex portion on the inner surface of the skirt portion and also forming the concave portion that corresponds to this convex portion on the outer surface of the skirt portion, it is possible to form the skirt portion having a substantially bellows shape as described above. Thus, in particular, it is possible to deform the cap having the thin skirt portion in the elastic region, and it is possible to achieve elastic deformation at the time of releasing from the mold. In addition, it is possible to easily increase the diameter and return to the original state. Furthermore, it is possible to form it so as to have the predetermined dimension without causing plastic deformation at the sealing portion or the screw portion that becomes an undercut.

The thickness of the synthetic resin sheet that can be used to form the screw cap according to the present invention differs depending on the synthetic resin to be used. In a case where the screw cap is made of polyester resin such as polyethylene terephthalate, it is preferable that the thickness falls in a range of 0.5 to 1.2 mm. In a case where the screw cap is made of olefin-based resin such as polypropylene, it is preferable that the thickness falls in a range of 0.5 to 1.5 mm.

In addition, for example, by using a multi-layer sheet including resin having a gas barrier property such as ethylene-vinyl alcohol copolymer or an intermediate layer having a gas barrier property and made of aluminum foil or the like, it is possible to provide a thin cap made of resin and having excellent gas barrier property.

Furthermore, by using a multi-layer sheet including an intermediate layer made of recycle material and internal and external layers made of virgin material, it is possible to provide a cap having an increased usage rate of recycle material without causing any hygienic problem at portions that come into contact with food or human.

In addition, the screw cap according to the present invention is configured such that a plurality of convex portions having the amount of protrusion in the radial direction smaller than the height of the screw head are disposed in the circumferential direction on the inner surface of the skirt portion. Thus, it is possible to increase the diameter of the skirt portion and also return to the original state by elastic deformation at the time of releasing from the mold, which makes it possible to improve the mold-releasing property even through a molding method such as compression molding or injection molding. That is, by using compression molding or injection molding to form the convex portion on the inner surface of the skirt and also form the concave portion corresponding to this convex portion on the outer surface of the skirt using a mold, it is possible to form a skirt portion having a substantially bellows shape as with the thermoformed cap using a synthetic resin sheet described above. This makes it possible to deform it in the elastic region, and also possible to effectively prevent the functions of the sealing portion and the screw portion from being impaired at the time of releasing from the mold.

The container to which the screw cap according to the present invention can be applied includes any conventionally known containers made of metal, glass, resin, or the like. There is no limitation to the mouth diameter that the screw cap is applied. However, it is preferable to apply it to a container of not more than 100 mm, in particular, in a range of 15 to 50 mm.

The screw cap according to the present invention can be formed through compression molding or injection molding as described above. However, in a case where a cap with a large mouth diameter is formed, it is particularly preferable to form it through thermoforming. That is, compression molding requires a large mold and a large pressurizing force, and injection molding requires a large projected area of a molded product and a large clamping force. Thus, an increase in the size of the equipment is unavoidable in either method. However, thermoforming is not only free from such problems but also efficient because of a high sheet utilization rate.

### Examples

### (Experimental Example 1)

A commercially available A-PET sheet having a thickness of 1.0 mm was heated to approximately 110°C. Vacuum-pressure molding was performed by using a resin mold illustrated in FIG. 11(A) in which convex portions extending in the axial direction and lower than the height of the screw thread were uniformly arranged in the circumferential direction on the inner surface of the molded cap skirt portion. Then, the molded sample is released from the mold by forced removal, and a portion other than the cap portion is cut with scissors to obtain a sample.

Note that, the molded sample was a cap having a mouth diameter of 28 mm suitable for a general PET bottle, and had a screw thread height of 0.65 mm and a height of the convex portion of 0.3 mm.

### (Experimental Example 2)

A sample shown in FIG. 11(B) was obtained in the same manner as in the experimental example 1 except that the same resin mold as shown in FIG. 11(A) was used and no convex portion was formed on the inner surface of the molded cap skirt portion.

After a sublimation type spray AESUB for 3D scan was sprayed on the inner surface of each of the samples obtained in the experimental examples 1 and 2, the shape of the inner surface of the sample was measured using a 3D scanner-type three dimensional measuring machine LV-500 manufactured by Keyence Corporation. The shapes such as the height of the screw thread were almost the same in both cases, but the shapes of the skirt portions were different. Table 1 shows the results of measuring the diameters of the inner surfaces of the cap and the taper angles of the inner surface of the skirt portion at a portion from the uppermost portion of the inner surface of the cap to a portion below the 13 mm.

**[Table 1]**

| | **Experimental Example 1** | **Experimental Example 2** |
|---|---|---|
| Diameter of inner surface of lower portion of skirt | 28.682 mm | 29.752 mm |
| Taper angle of inner surface of skirt portion | 0.2° | 1.3° |

Although the taper angle of the inner surface of the skirt portion is 0° because the resin mold is not provided with a draft taper in terms of design, it was confirmed that the diameter of the lower portion of the skirt portion increased after forced removal and the skirt portion had a taper angle of 1.3° in the experimental example 2 as shown in Table 1. On the other hand, in the experimental example 1, it was found that the diameter was smaller than that in the experimental example 2 by approximately 1 mm, and the taper angle of the skirt portion was almost the same as that of the resin mold. Since the difference between them lies in the presence or absence of the convex portion formed on the inner surface of the skirt portion, it is presumed that in the experimental example 1, the limit region of elastic deformation is widened by the convex portion on the inner surface of the skirt portion, and the final deformation is suppressed.

### Industrial Applicability

The screw cap according to the present invention can be formed through thermoforming of a synthetic resin sheet and has re-sealing performance through screwing engagement. In addition, it is possible to achieve liquid-tightness. Thus, it is possible to use it as a cap of a beverage container such as a polyester bottle.

### Reference Signs List

1 screw cap, 2 top surface, 3 inner side wall, 4 annular portion, 5 screw portion, 6 skirt portion, 7 annular protruding portion, 8 countersink portion, 9 contact ring, 10 upper skirt portion, 20 convex portion, 21 spirally shaped concave portion, 22 axial concave portion, 30 container mouth portion

## Claims

1. A screw cap having a drop-lid shape, the screw cap comprising:
a top surface;
an inner side wall extending upward from an outer peripheral edge of the top surface; and
a skirt portion including a screw portion and coupled to the inner side wall through an annular portion extending outward from an upper end of the inner side wall, wherein
the inner side wall includes an annular protruding portion having an outer diameter greater than an inner diameter of a container mouth portion to which the screw cap is applied, and is elastically deformable in a cap radial direction.

2. The screw cap according to claim 1, wherein
the inner side wall has a shape of an inequality sign that is bent outward in the cap radial direction, and
the annular protruding portion is a bend portion of the shape of the inequality sign.

3. The screw cap according to claim 1 or 2, wherein a countersink portion is formed at an outer peripheral edge of the top surface.

4. The screw cap according to any one of claims 1 to 3, wherein the top surface has an upwardly-domed shape or a downwardly-domed shape.

5. The screw cap according to any one of claims 1 to 4, wherein a sealing portion configured to come into tight contact with an outer surface of the container mouth portion is formed at an upper portion of the skirt portion.

6. The screw cap according to any one of claims 1 to 5, wherein the screw cap is made of synthetic resin.

7. The screw cap according to claim 6, wherein
the skirt portion includes a plurality of convex portions disposed in a circumferential direction on an inner surface of the skirt portion, the convex portions having an amount of protrusion in a radial direction smaller than a height of a screw thread, and
an irregularity formed in a circumferential direction on the skirt portion by the plurality of convex portions allows the skirt portion to be elastically deformed in a radial direction.

8. The screw cap according to claim 7, wherein
the convex portions are convex portions extending in an axial direction or extending to be tilted relative to the axial direction.

9. The screw cap according to claim 7 or 8, wherein concave portions corresponding to the convex portions are formed on an outer surface of the skirt portion.

10. The screw cap according to any one of claims 6 to 9, wherein the synthetic resin is polyethylene terephthalate.

11. The screw cap according to any one of claims 1 to 10, wherein the screw cap is a screw cap to be applied to a bottle.

12. A method of manufacturing the screw cap described in any one of claims 1 to 11, the method comprising
forming a synthetic resin sheet into a shape of a cap through thermoforming.

13. The method of manufacturing the screw cap according to claim 12, comprising mold releasing from an inside of the cap by forced removal after shaping the synthetic resin sheet into the shape of the cap through the thermoforming.
